# EUROPEAN PATENT APPLICATION

(11) **EP 1 544 709 A1**
(43) Date of publication of application: **22.06.2005**
(21) Application number: 04028763.3
(22) Date of filing: 03.12.2004
(51) Int. Cl.: G06F 1/00, H04L 9/00, G06F 9/50

(54) **Distribution computer system managing method**

(30) Priority: 04.12.2003 JP 2003405608
(71) Applicant: MATSUSHITA ELECTRIC INDUSTRIAL CO., LTD., Kadoma-shi, Osaka 571-8501 (JP)
(72) Inventor: Tanaka, Katsuyoshi, Yokohama-shi Kanagawa 224-0016 (JP); Kajimoto, Yasuhiko, Sasayama-shi Hyogo 669-2231 (JP)
(74) Representative: Grünecker, Kinkeldey, Stockmair & Schwanhäusser Anwaltssozietät

(57) **Abstract**

It is an object to put a job corresponding to the utilization rate of a distribution computer system which is set by the responsible person of a system within the range of an authority which is given.
[Means for Resolution] There are provided a CPU resource allocation setting function 300 capable of setting the utilization rate of a CPU resource on a project unit, a business application resource allocation setting function 400 of setting the number of simultaneously usable business applications to each system class and managing the same number hierarchically, a queue priority setting function 500 of setting the priority of a business application to be used, a queue information configuration function 600 capable of setting or changing information such as the amount of memory use which is required for executing the business application, a user information configuration function 700 for registering and deleting a user, and a function of confirming the validity of contents set by the user.

## Description

### BACKGROUND OF THE INVENTION

### 1. Field of the Invention

The present invention relates to a distribution computer system managing method in a computer system for integrating a plurality of computers (servers) distributed and provided on a network, and more particularly to a technique for setting a necessary computer utilization rate for causing a user to execute a job.

### 2. Description of the related art

In a present-day enterprise activity, all enterprises always utilize some computer systems. In the background, new computer systems and mechanisms are successively introduced in order for the enterprises to seek an increase in the efficiency of business in some cases. As a result, an intercorporate competition has become further keen. In all scenes of the enterprise activity, a processing is to be completed surely before a determined time and date in a part of the business by delaying another business and new products and services are to be put onto the market earlier than other companies in order to win the intercorporate competition and to survive the enterprise. Such a period has come.

Therefore, these enterprises have put a large number of management resources to construct a large-scale distribution computer system connecting a plurality of computers (servers) by using a local area network or a wide area network in order to complete the business generated in all scenes of the enterprise activity before the time and date. In recent years, particularly, there have been reported a large number of enterprise activities efficiently utilizing a large-scale distribution computer system such as a biotechnology or a genome analysis.

Conventionally, examples of a method of efficiently utilizing a large-scale distribution computer system include a method of determining a job distributing method from the consuming state of each computer resource in the starting of a job (JP-A-10-11406 Publication). Moreover, there has been a method of predicting the amount of server resources consumed by the job to be executed and distributing the job in such a manner that the sum of the server resources to be used by the job does not exceed the total amount of the resources possessed by the server (JP-A-10-19864 Publication).

It is possible to efficiently employ the large-scale distribution computer system to some extent by such a job executing method. On the other hand, it is impossible to cope with such a situation as to give the highest priority to a specific business to be executed. As a method of implementing the function, a large number of enterprises introduce and practically use distribution processing tools put on the market. The distribution processing tool has been described in "LSF Administrator's Guide Version 4.2 June 2001, Platform Computing Company". "Sun Grid Engine 5.3 and Sun Grid Engine, Enterprise Edition 5.3 Reference Manual [Part No. 816-4767-10], Sun Microsystems Company" and "Sun Grid Engine, Enterprise Edition 5.3 Administration and User's Guide, Sun Microsystems Company".

As a system for managing the license of a business application tool, moreover, JP-A-10-111797 Publication has disclosed a technique for managing a license distribution based on use conditions which are preset on a project unit. By utilizing these distribution processing tools, it is possible to carry out such an employment as to allocate the resources of the large-scale distribution computer system to a specific business with the highest priority.

In the conventional art, in the case in which a president decides to give the highest priority to a specific business, it is possible to carry out such an employment as to allocate the resources of a large-scale distribution computer system to the same business with the highest priority by utilizing the distribution processing tools put on the market as described above. However, the employing method roughly has three problems.

For a first problem, there is generated a state in which the employment configuration of the distribution computer system cannot be changed rapidly in the case in which the president decides to give the highest priority to a specific business in a business situation or schedule to be changed from day to day.

In the case in which the president decides to give the highest priority to the specific business, the administrator of the distribution processing computer system changes setting by using the distribution processing tool in such a manner that the specific business can use the resources of the distribution computer with the highest priority. As a result, a department for promoting the specific business can occupy the computer resources at approximately 50% of the distribution computer system, for example.

Conventionally, these specific setting changes are not directly executed by a user but only the administrator of the distribution computer system. The reason is that a method of operating the setting change can change the setting of a whole distribution computer system and the utilization rate of another department can also be changed freely, and therefore, there is a possibility that the setting might be carried out in order for a self-department business to always perform a utilization with the highest priority when the user can directly execute the operation.

More specifically, when the user directly executes the setting change, there is a possibility that the intension of the president might be ignored entirely. In order to avoid the direct operation of the user, therefore, the system manager of the distribution computer system executes the operation. Since such an employment structure is executed, there is generated a state in which it is impossible to rapidly cope with the business situation or schedule to be changed from day to day.

As a second problem, it is impossible to set the employment of the distribution computer system adapted to the authority of a company system class. In a company system, usually, the top-level responsible person of a management does not decide all businesses but a system class is constituted on a dividing unit into each specific business field and various matters generated on a business are decided and employed on each system unit. Thus, the company system is grouped into a hierarchical structure and a full-time responsible person promotes the business on his (her) own authority for each specific business field.

On the other hand, in the distribution computer system to be used for promoting the business, all members utilize one distribution computer system, and a responsible person for each business field cannot decide whether or not the highest priority is given to only a specific business to utilize the distribution computer system but the top-level responsible person of a management always needs to make a decision. Thus, there has been generated a situation in which the distribution computer system cannot be employed in an adapted configuration to the authority of the company system class.

As a third problem, the manager of the distribution computer system personally copes with the mechanism of the employment in order to solve the two problems for the employment. For this reason, an increase in the system management man-hour of the manager is caused.

### SUMMARY OF THE INVENTION

The invention solves the conventional problems and has an object to provide a distribution computer system managing method capable of giving an authority to change the setting of the utilization rate of a distribution computer system to the responsible person of a business who is the representative of a user by himself (herself), and at the same time, preventing the same person from being given an authority to change the utilization rate of a distribution computer system utilized by another department in order to solve the first problem in a computer system for integrating a plurality of computers (servers) distributed and provided on a network.

In order to solve the second problem, moreover, it is an object of the invention to provide a distribution computer system managing method of setting the responsible person of a business who is the representative of a user on the same class or group unit as that in a company system configuration, giving an authority to set and change the utilization rate of a distribution computer system on a unit of each responsible person of a business by himself (herself), and causing the authority to be identical to that in a business promoting configuration in a company system, and at the same time, preventing an authority to change the utilization rate of a distribution computer system utilized by another department from being given.

In order to solve the third problem, furthermore, it is an object of the invention to provide a distribution computer system managing method capable of delegating an authority to set an employment to the responsible person of each business department and preventing an increase in the man-hour of a system manager in place of a configuration in which the system manager of a distribution computer system takes charge of the whole employment and setting.

The invention provides a distribution computer system managing method in which a plurality of computers is mutually connected through a network and is integrated and employed, wherein the number of business application tools which can be used for each user of the distribution computer system is set to each system class depending on an authority given to the same user. According to this structure, it is possible to set the number of the application tools which can be used at the same time to each system class depending on the utilization rate of the distribution computer system set by the responsible person of a system class to which the user belongs, and to manage a set value depending on the situation of a project. Therefore, it is possible to carry out an employment which rapidly corresponds to a business situation or schedule to be changed from day to day.

In the distribution computer system managing method according to the invention, the number of application tools which is set to each system class is set within such a range as not to exceed the number of simultaneously usable application tools which is set to the user of one more upper system class of the optional user. According to this structure, the number of the application tools which can be used simultaneously by the user is hierarchically set to be coincident with the system class of a business. Consequently, it is possible to systematically manage the utilization rate of the distribution computer system and to easily carry out the distribution computer system management also in a large-scale system in a multiclass.

In the distribution computer system managing method according to the invention, the number of simultaneously usable application tools which is set to the lower user of the system class is set or changed within such a range as not to exceed the number of simultaneously usable application tools which is set to a self-system class. According to this structure, the upper user of the system class can properly manage the set value of the number of the application tools of the simultaneously usable lower user depending on the situation of a project within the range of an authority given to the same upper user himself (herself).

In the distribution computer system managing method according to the invention, the number of the simultaneously usable application tools is set or changed within such a range as not to exceed the number of the simultaneously usable application tools which is set to the upper user of the system class. According to this structure, an optional user can set or change the number of application tools which can be used simultaneously by himself (herself), and can obtain a mechanism in which the value to be set or changed automatically ranges within an authority given to himself (herself) in that case.

According to the invention, it is possible to manage, for each system class, the number of business application tools which can be used for each user of the distribution computer system depending on an authority given to the user. Consequently, it is possible to set, for each system class, the number of the simultaneously usable application tools depending on the utilization rate of the distribution computer system set by the responsible person of the system class to which the user belongs, and to manage a set value depending on the situation of a project. Thus, it is possible to carry out an employment which rapidly corresponds to the business situation or schedule to be changed from day to day.

### BRIEF DESCRIPTION OF DRAWINGS

Fig. 1 is a block diagram showing the structure of a distribution computer system in which a distribution computer managing system according to an embodiment of the invention is constructed,
Fig. 2 is a diagram showing a functional structure, illustrating a hierarchical structure of a user interface function and each reference file in the distribution computer managing system according to the embodiment of the invention,
Fig. 3 is a flowchart showing a procedure for the processing of a user authentication menu,
Fig. 4 is a diagram showing an example of an ACL attribute file to which the user authentication menu refers,
Fig. 5 is a flowchart showing a procedure for the processing of a top menu,
Fig. 6 is a diagram showing an example of a top menu attribute file to which the top menu refers,
Fig. 7 is a diagram showing an example of the display of a system structure and CPU resource allocation information thereof in a CPU resource allocation setting function,
Fig. 8 is a diagram showing an example of the display of a system structure and business application resource allocation information in a business application resource allocation setting function,
Fig. 9 is a diagram showing an example of a set screen in the business application resource allocation setting function,
Fig. 10 is a flowchart showing a procedure for the processing of the business application resource allocation setting function, and
Fig. 11 is a diagram for explaining an example of the description of the number of licenses in each system class of a business application resource allocation information tree.

### DESCRIPTION OF THE PREFERRED EMBODIMENTS

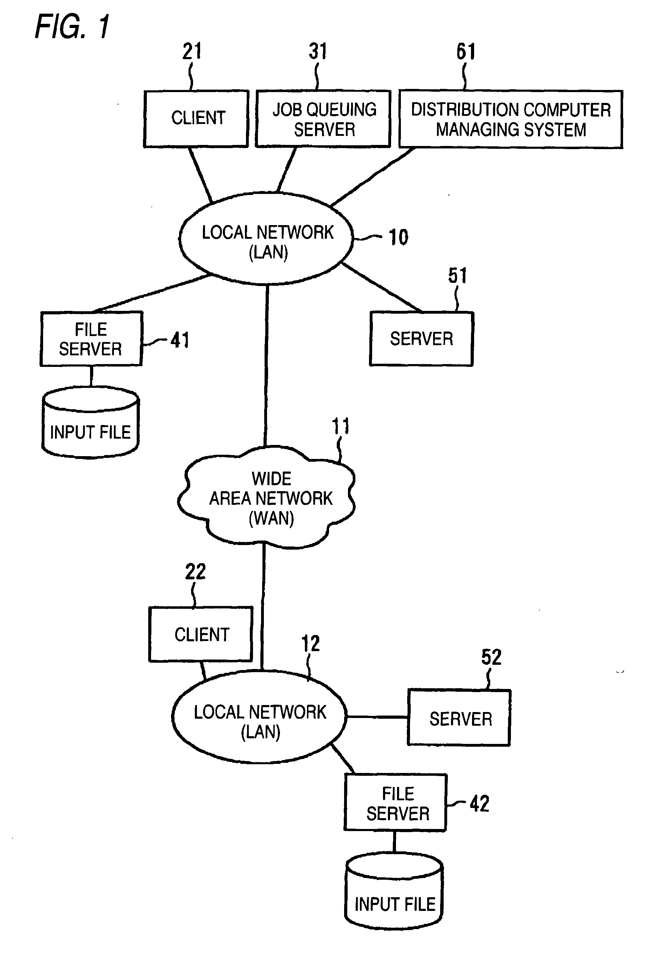

Fig. 1 is a block diagram showing the structure of a distribution computer system in which a distribution computer managing system according to an embodiment of the invention is constructed. In Fig. 1, clients 21 and 22 are computers for putting a job, a job queuing server 31 is a computer for queuing a job executed by a user and searching for a server capable of optimally executing a job, and executing the job, file servers 41 and 42 are computers for storing an input file and an application program which are to be used for the job, servers 51 and 52 are computers for executing a job, and 61 denotes a computer for mounting a distribution computer managing system, and they are mutually connected through local area networks 10 and 12 and a wide area network 11.

The clients 21 and 22, the job queuing server 31, the file servers 41 and 42, the servers 51 and 52, and the computer 61 are electronic computers such as personal computers or work stations respectively. A job file, an input file and an application file are stored on a storage device connected to the servers 41 and 42.

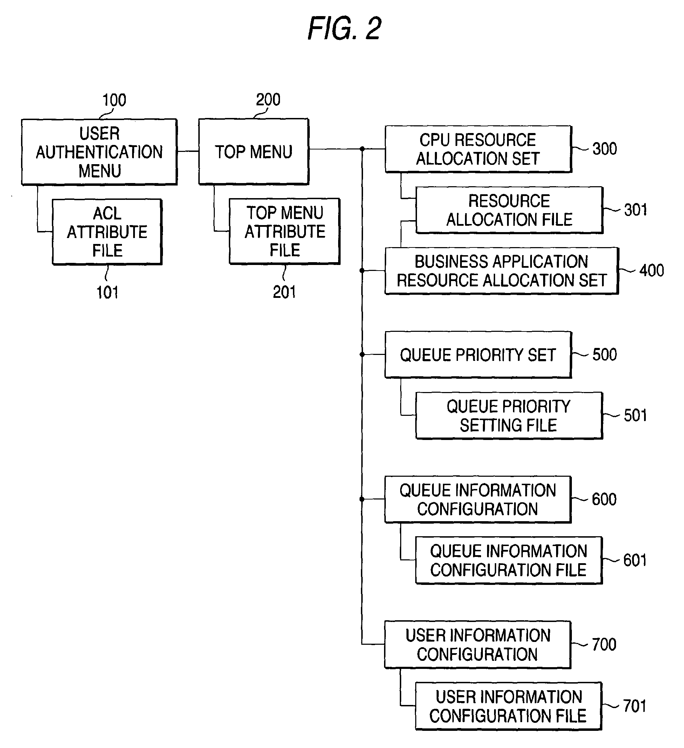

Fig. 2 is a diagram showing a functional structure, illustrating the hierarchical structure of a user interface function and each reference file in a distribution computer managing system according to an embodiment of the invention. The user interface function is constituted by a user authentication menu 100, a top menu 200, a CPU resource allocation setting function 300, a business application resource allocation setting function 400, a queue priority setting function 500, a queue information configuration function 600, a user information configuration function 700, and a function of confirming the validity of a user set value.

From the respective user interface functions, reference is made to an ACL attribute file 101, a top menu attribute file 201, a resource allocation file 301, a queue priority setting file 501, a queue information configuration file 601 and a user information configuration file 701.

The user authentication menu 100 is a function of identifying a user and specifying the authority of the utilization of the user in the distribution computer managing system. An identification number such as an employee number which is individually possessed by the user is input so that an authority to set and change a distribution computer system possessed by a system to which the user belongs and the user is specified uniquely. At this time, the authority given to the user is caused to correspond to the class or group of the system so as to be coincident with an authority on a business promotion in a company system.

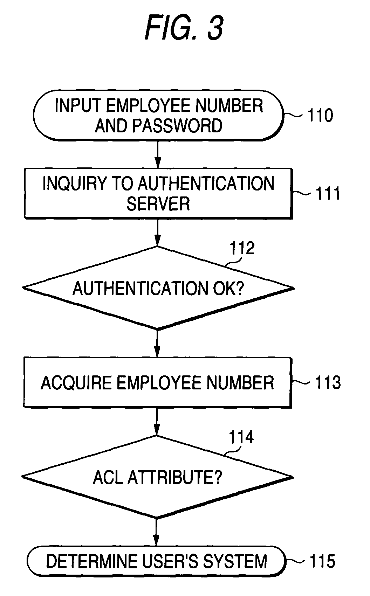

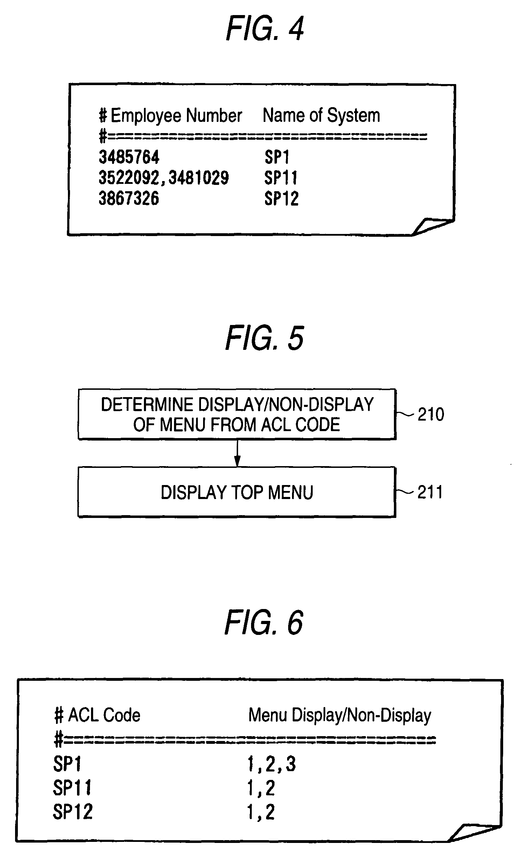

Fig. 3 is a flowchart showing a procedure for the processing of the user authentication menu 100, and Fig. 4 shows an example of the ACL attribute file 101 to which the authentication menu 100 refers. In Fig. 3, a user is required to input an employee number and a password at Step 110 and this is inquired to an authentication server at Step 111. When a person himself (herself) is authenticated at Step 112, reference is made to the ACL attribute file 101 according to the employee number to specify a belonging system at Step 114, and the access level of the user is authenticated at Step 115.

The top menu 200 is a function of setting and displaying a menu which can be utilized by the user after the identification of the user. A function having a utilization authority which is not possessed by the user is excluded from the menu and is not displayed thereon.

Fig. 5 is a flowchart showing a procedure for the processing of the top menu 200 and Fig. 6 shows an example of the top menu attribute file 201 to which the top menu 200 refers. In Fig. 5, reference is made to the top menu attribute file 201 to determine a display / non-display on the menu of each user interface function at Step 210 by using an ACL code of a belonging class name obtained by referring to the ACL attribute file 101 through the user authentication, and a result is displayed in a menu format at Step 211.

The CPU resource allocation setting function 300 can set the utilization rate of a CPU to be the resource of the distribution computer system on a project unit to be a minimum business unit. In that case, the setting can be carried out within the range of the authority given to the user.

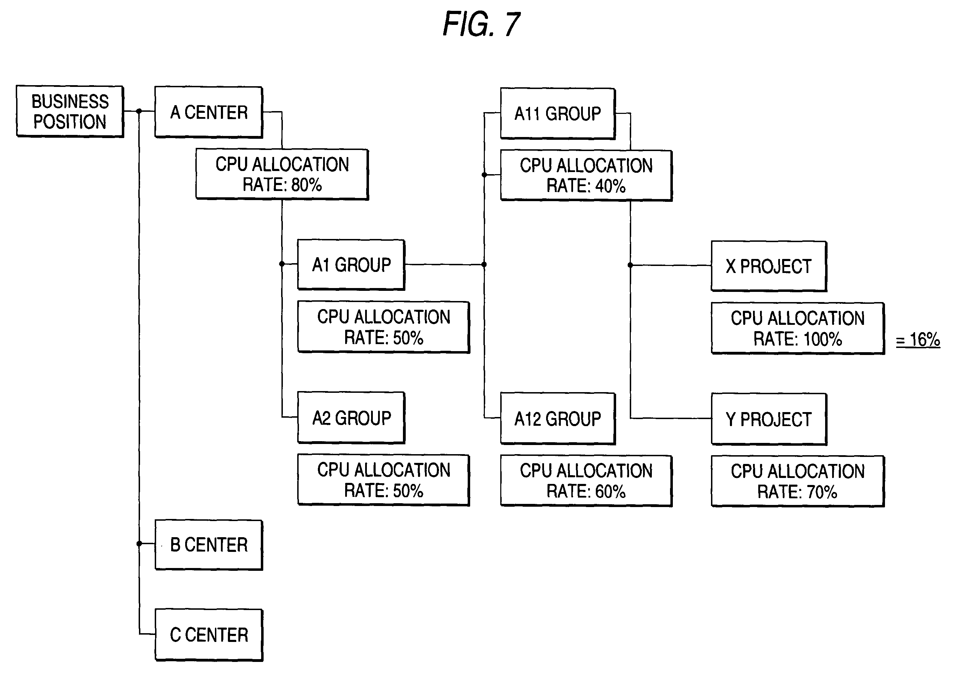

When the CPU resource allocation setting function 300 is selected in the top menu 200, reference is first made to the resource allocation file 301 and a system structure and resource allocation information for each system class are displayed. A resource is displayed on a CPU group unit. Fig. 7 shows an example of the display of the system structure and the CPU resource allocation information.

The business application resource allocation setting function 400 serves to limit the number of licenses of a business application to be used on a business. The number of business application resource allocations set to each class is identical to the number of maximum simultaneous use licenses.

The number of the licenses can be set to all classes and is set on a project unit to be a minimum business unit from the highest project management class. The number of licenses which exceeds the number of maximum simultaneous use licenses set to the higher class cannot be set to a lower class.

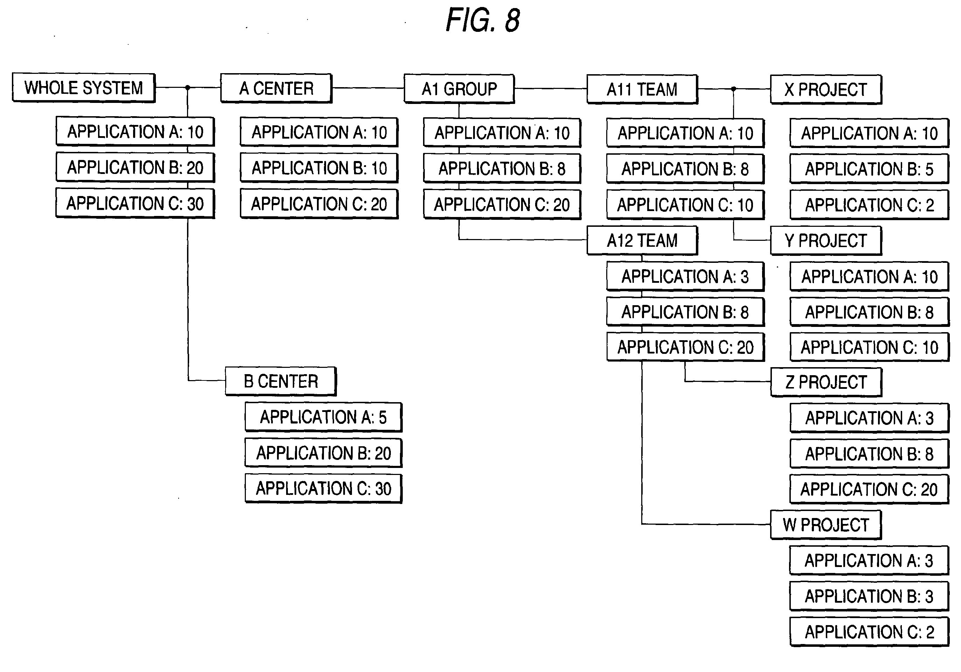

When the business application resource allocation setting function 400 is selected, reference is first made to the resource allocation file 301 to create the tree of business application resource allocation information in the system class. Fig. 8 shows an example of the display of the system structure and the business application resource allocation information, and the number of the licenses of a business application is displayed for each system class.

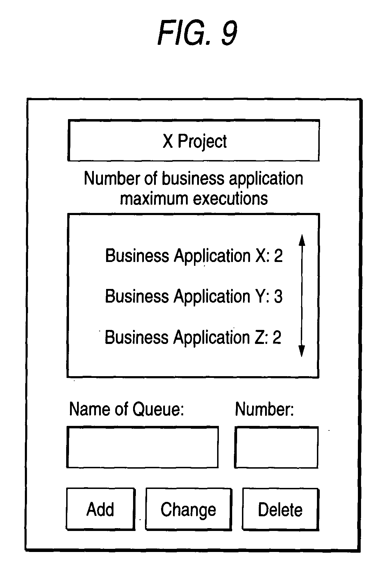

Referring to a project selected from the display of the system class in Fig. 8, furthermore, it is possible to change the number of the business applications which are utilized. Fig. 9 shows the set screen of the business application resource allocation. The screen displays the number of business application maximum executions which is currently set. On the other hand, by a screen operation, it is possible to select, delete and change a display line over the screen or to carry out an addition from an input column.

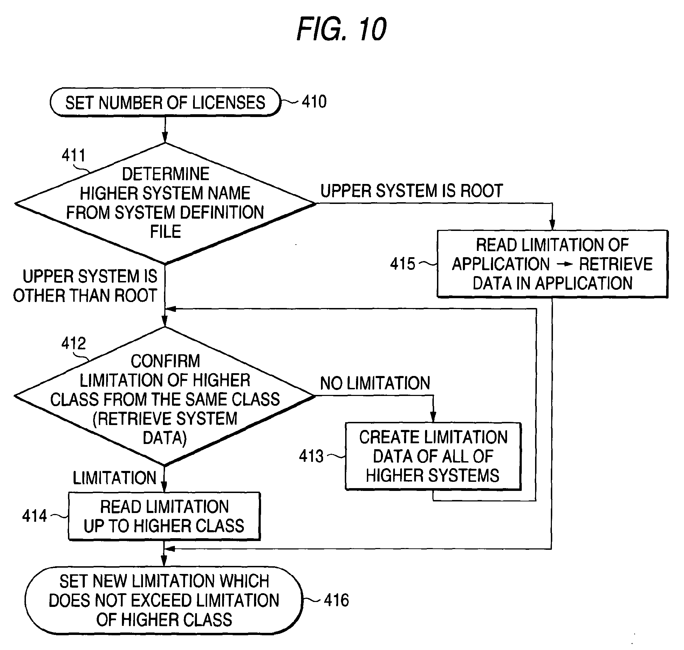

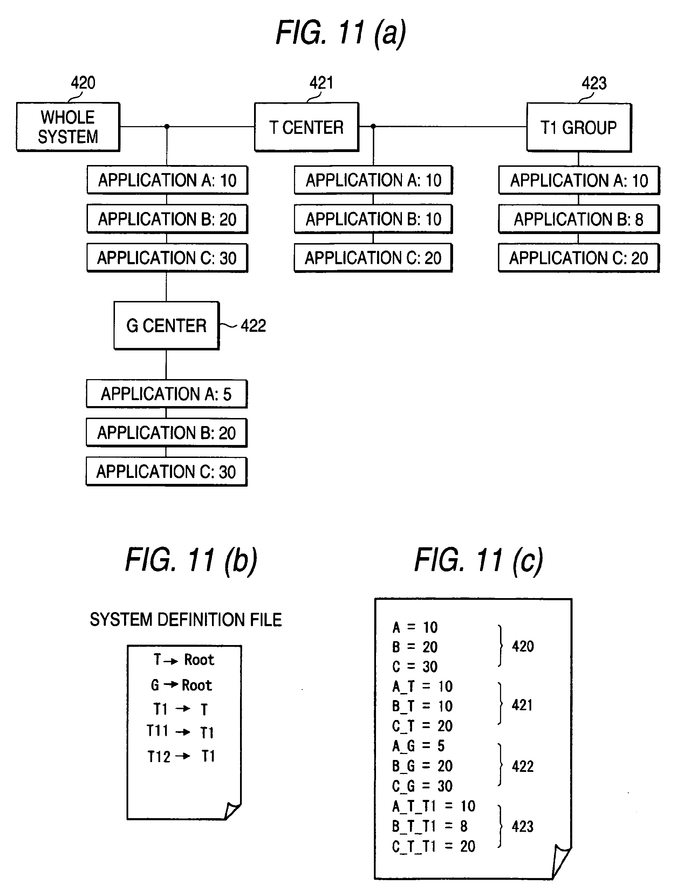

Fig. 10 is a flowchart showing a procedure for the processing of the business application resource allocation setting function 400, and Fig. 11 is a diagram for explaining an example of the description of the number of licenses in each system class of the business application resource allocation information tree.

In Fig. 10, in the case in which the number of licenses is to be set for a certain system, reference is first made to a system definition file shown in Fig. 11 (b) to determine the higher system name of the same system at Step 411. If the higher system is other than the highest system (root), system data are retrieved in order to confirm the limitation of the higher class than the same class at Step 412.

If the number of licenses in each system class is obtained like the tree of the business application resource allocation information shown in an example of Fig. 11 (a), the number of licenses of each system class is described corresponding to each of system classes 420 to 423 as shown in Fig. 11 (c).

By retrieving these information, it is possible to read a limitation up to the higher class at Step 414 and to set or change the limitation of the class in accordance with a request for setting the number of licenses within such a range as not to exceed the limitation of the higher class at Step 416.

If the limitation of the higher class is not set at the Step 412, limitation data on all of the higher classes are created at Step 413. If the higher system is the root at the Step 411, moreover, a limitation for the application is read at Step 415. Consequently, it is possible to obtain the maximum number of licenses which can be used.

Thus, the authority determined for each user can be managed every class and the number of simultaneous usable application tools can be fixed corresponding to the authority determined for each user after the user authentication, and a job can be put into a distribution computer system according to the utilization rate of the distribution computer system which is set by the responsible person of a company system to which the user belongs.

In the execution of a business application to be used on a business over the distribution computer system, a job is carried out by utilizing an execution queue over the computer system. The queue priority setting function 500 serves to set the priority of a business application which is utilized by the user in a self-department.

By using the same function, it is possible to raise the execution priority of a specific business application. To the contrary, it is also possible to lower the execution priority of the specific business application. The queue priority can be set to only a project class. In that case, the setting can be carried out within the range of the authority given to the user.

When the queue priority setting function 500 is selected, reference is first made to the resource allocation file 301 and the queue priority setting file 501 to create the tree of queue priority setting information in a system class.

The queue information configuration function 600 can cause a user to set or change information such as an amount of memory use which is required for executing the business application. By the same function, it is possible to designate a physical memory amount, an OS version or a job execution mode in a computer to carry out the business application.

The user information configuration function 700 serves to register a new user. Also in the case in which a user belonging to a specific project is moved to another project or is deleted, the attribute of the user belonging to the project is changed by using the same function. A user information configuration can be registered for only a project class.

As a function of confirming the validity in the whole environment of the queue priority and the queue information configuration which are set to each other before putting a job, furthermore, there is provided a function of confirming the validity of a user set value. If it is decided that there is no validity, a system manager forcibly carries out a change to the set contents, and furthermore, puts a job.

By the functions described above, job putting user information is acquired based on a system structure and a resource use condition and a queue priority for executing the job are set to each job putting user, and a resource allocation is carried out for each system class. Consequently, it is possible to put a job into a distribution computer system corresponding to the utilization rate of the distribution computer system set by the responsible person of a company system to which a user belongs.

The distribution computer system managing method according to the invention can produce such an advantage as to manage, for each system class, the number of business application tools which can be used for each user of the distribution computer system depending on an authority given to the user, and therefore, to set, for each system class, the number of the simultaneously usable application tools depending on the utilization rate of the distribution computer system set by the responsible person of the system class to which the user belongs, and to manage a set value depending on the situation of a project and to carry out an employment which rapidly corresponds to the business situation or schedule to be changed from day to day, and is useful for a technique for setting a necessary computer utilization rate for causing a user to execute a job.

## Claims

1. A distribution computer system managing method, in which a plurality of computers is mutually connected through a network and is integrated and employed;
wherein the number of business application tools which can be used for each user of the distribution computer system is set to each system class depending on an authority given to the same user.

2. The distribution computer system managing method according to claim 1, wherein the number of application tools which is set to each system class is set within such a range as not to exceed the number of simultaneously usable application tools which is set to the user of one more upper system class of the optional user.

3. The distribution computer system managing method according to claim 1, wherein the number of simultaneously usable application tools which is set to the lower user of the system class is set or changed within such a range as not to exceed the number of simultaneously usable application tools which is set to a self-system class.

4. The distribution computer system managing method according to claim 1, wherein the number of the simultaneously usable application tools is set or changed within such a range as not to exceed the number of the simultaneously usable application tools which is set to the upper user of the system class.

5. A distribution computer system managing system, implementing the distribution computer system managing method according to any one of claim 1, claim 2, claim 3, and claim 4.
